# EUROPEAN PATENT SPECIFICATION

(11) **EP 1 270 272 B1**
(45) Date of publication and mention of the grant of the patent: **10.12.2008**
(21) Application number: 02020271.9
(22) Date of filing: 02.09.1998
(51) Int. Cl.: B60C 13/00, B60C 13/02

(54) **Design patterns for a tire sidewall**
Motiv für Seitenfläche eines Reifens
Motifs de dessin pour flancs de pneumatiques

(43) Date of publication of application: 02.01.2003
(62) Divisional of application: 98944688.5
(73) Proprietor: The Goodyear Tire & Rubber Company, Akron, OH 44316-0001 (US)
(72) Inventor: Ratliff, Billy, Joe, Jr., Akron, OH 44319 (US)
(74) Representative: Kutsch, Bernd

(56) References cited:
- GB-A- 2 114 511

## Description

### Technical Field

This invention generally pertains to design patterns for opaque articles. More specifically, this invention relates to at least two design patterns used on the surface of a opaque article, one pattern comprising pluralities of parallel ridges oriented to yield a striking visual appearance. Portions of the subject matter described herebelow and more specifically relative to FIG. 1 and 3 are claimed in EP-A- 1 109 681.

### Background Art

The invention is particularly applicable to the black sidewalls of rubber tires. Manufacturers have for many years placed numerals, letters, characters or other designations, hereinafter referred to generally as "indicia" upon the sidewalls of tires to enhance the appearance and marketability of their products. Such markings are described in US-A- 4,198,744 and 4,823,856.

The subject matter of US-A- 4,198,774, issued April 22, 1980, was invented by Roberts and Lowther. The invention describes the use of lineal projections which are substantially straight, parallel, and of substantially identical cross-section to form indicium. An indicium is described as a letter or numeral or the like.

A later issued patent of Charles W. Roberts, US-A- 4,823,856, issued April 25, 1989, describes the use of serrated markings for the sidewall of a tire. The invention relates to a design of a substantially flat ungrooved portion surrounded by a serrated portion which includes a plurality of ribs separated by grooves. The combination of the flat design surrounded by a serrated band portion defines an indicium.

US-A- 5,303,758 discloses the use of two or more distinctive patterns or ridges which create an unusual contrasting effect of light and shadow when viewed from an angular perspective of 60 or less.

GB-A- 2 114 511, considered as closest prior art to the subject-matter of claim 1, discloses an indicium for a rubber article having at least a narrow groove. The indicium is made of a rubber having a first colour such that the narrow groove is perceived as a narrow line of a contrasting colour.

### Summary of the Invention

This invention relates to a tire sidewall as defined in the claims. The invention employs the use of at least two distinctive design patterns which improves the visual appearance of an opaque article by increasing the visual contrast of the surfaces of articles. The invention is particularly well-suited for a black sidewall tire.

The invention relates to stacking alternating series of patterns A and patterns B of substantially the same size but only partially overlaying the other pattern. The indicia appears to be stacked in a pronounced three dimensional form when in fact the patterns lie in substantially the same plane.

### Definitions

"Axial" and "axially" are used herein to refer to lines or directions that are parallel to the axis of rotation of a tire.

"Circumferential" as used herein means lines forming or enclosing an arc, the arc being within a plane perpendicular to the axis of rotation of the tire.

"Light deflection" means that as light strikes a surface, the reflected light is angularly directed relative to the angle of incidence of the light source yielding what appears to be a light absorbing characteristic to an observer who is positioned in general alignment which with light source.

"Light reflection" means that as light strikes an object, the reflected light is generally aligned with the angle of incidence yielding what appears to be a shiny or reflective characteristic to an observer who is positioned in general alignment with the light source.

"Radial" and "radially" are used to mean directions radially toward or away from the axis of rotation of the tire.

"Sidewall" means that outer portion of a tire between the tread and the bead.

"Tread" means that portion of the tire that comes into contact with the road under normal inflation and load.

### Brief Description of the Drawings

FIG. 1 shows an illustrative example of a side view of a tire 10 with a pattern A and pattern B shown on the sidewall 12 of the tire 10, pattern B being superimposed over pattern A, which, however, does not form part of the present invention.

FIG. 2A is a cross-sectional view of the tire 10 of FIG. 1.

FIG. 2B is a cross-sectional view of the patterns A and B.

FIG. 3 shows another illustrative example of a is an side view of a tire with patterns, A, B and C, wherein pattern A is superimposed over pattern B, and both patterns A and B lie within a band formed by pattern C, which, however, does not form part of the present invention.

FIG. 4 is an enlarged cross-sectional view of patterns A, B and C taken from FIG. 3.

FIG. 5 is an embodiment of patterns A, B and C illustrating the use of a series of repeating patterns according to the invention.

FIG. 6 shows a prior art tire sidewall.

FIG. 7 is an alternative embodiment of the repeating pattern of FIG. 5.

### Detailed Description of the Invention

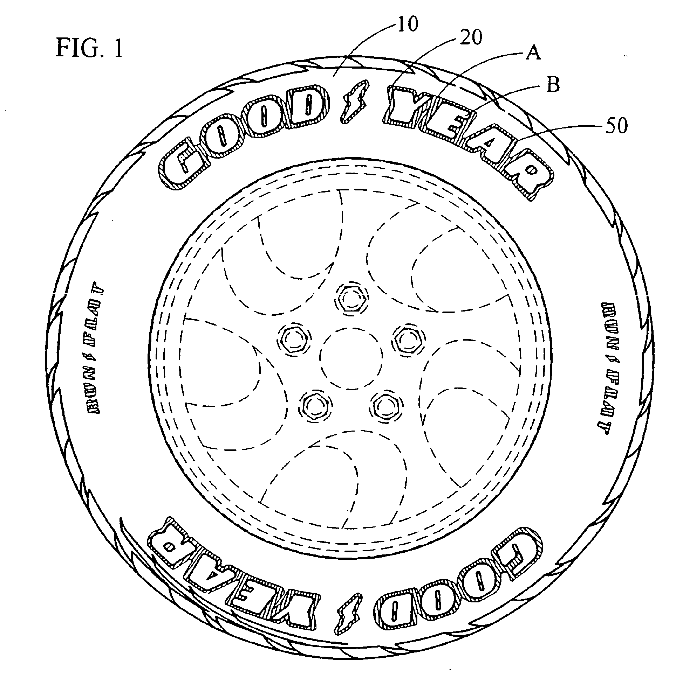

A side view of a tire 10 with design patterns A and B, on the sidewall 12 of the tire 10 is illustrated in FIG. 1.

In the preferred embodiment shown in exemplary FIG.1, pattern A forms a wide decorative indicia outline comprised of ridges 20. The ridges 20 of pattern A each extend in a substantially radial direction. In the illustrated preferred embodiment, ridges 20 of pattern A extend equally in length and have similar cross-sectional shapes. Each radially extending ridge 20 appears to be parallel to an adjacent ridge 20.

Design pattern B is illustrated in FIG.1 superimposed over a portion of the larger design pattern A. Pattern B has a similarly flat or smooth surface 30 devoid of the ridges of pattern A, pattern A outlining pattern B. Pattern A forms a background for the pattern B markings.

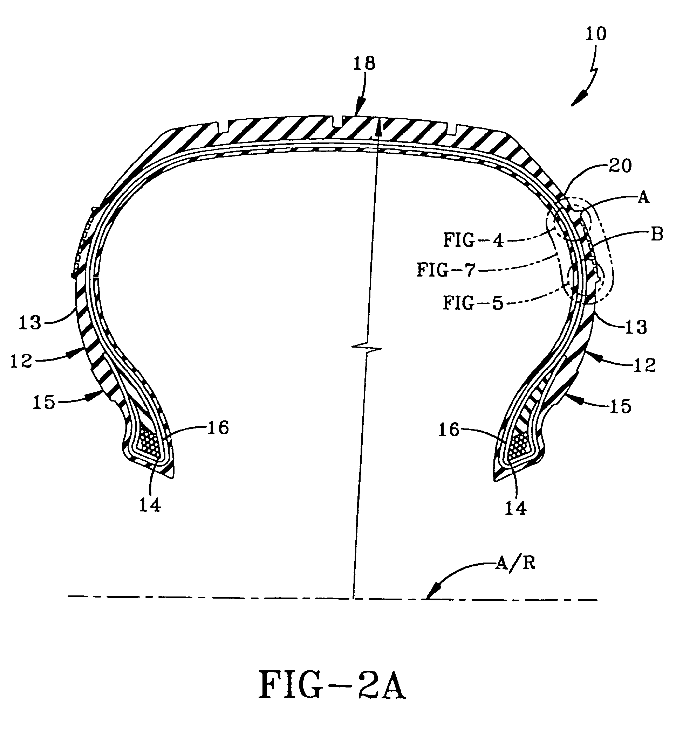

FIG. 2A illustrates a cross-sectional view of the tire 10 of FIG. 1 taken along lines 2-2. The tire 10 has an axis of rotation (A/R), a pair of annular beads 14, carcass plies 16 wrapped around the annular beads 14, a tread 18 disposed over the carcass plies 15 in a crown area of the tire and sidewalls 12 disposed between the tread 18 and the beads 14. A sidewall 12 of the tire 10 has the design patterns A and B located on the exterior annular surface 13 of the sidewall. Near the bead region a secondary decorative band 15 is illustrated.

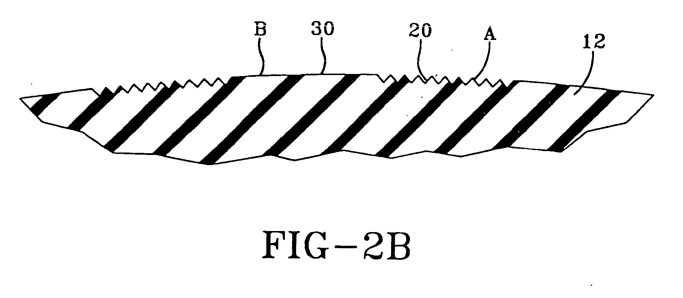

As shown in FIG. 2B the ridges 20 of pattern A are preferably of trapezoidal shape which approximate a triangular cross-section. The bases of the trapezoidal cross-sections are ideally positioned very close or intersect such that pattern A exhibits minimal surfaces parallel to the tire sidewall 12. The use of these trapezoidal cross-sections yield a generally light deflecting or non-reflective background when viewed from a perpendicular position relative to the sidewall 12.

The design pattern B as illustrated at FIG. 2B is smooth in shape approximating flat shapes. The ridges 20 of pattern A are spaced a sufficient distance to provide a light shadowing space outlining the flat light reflecting surface 30. The flat surfaces 30 yield a pattern B exhibiting a light contrasting appearance whereby the observer can readily distinguish the design patterns B which stand out when compared to the outlining background pattern A.

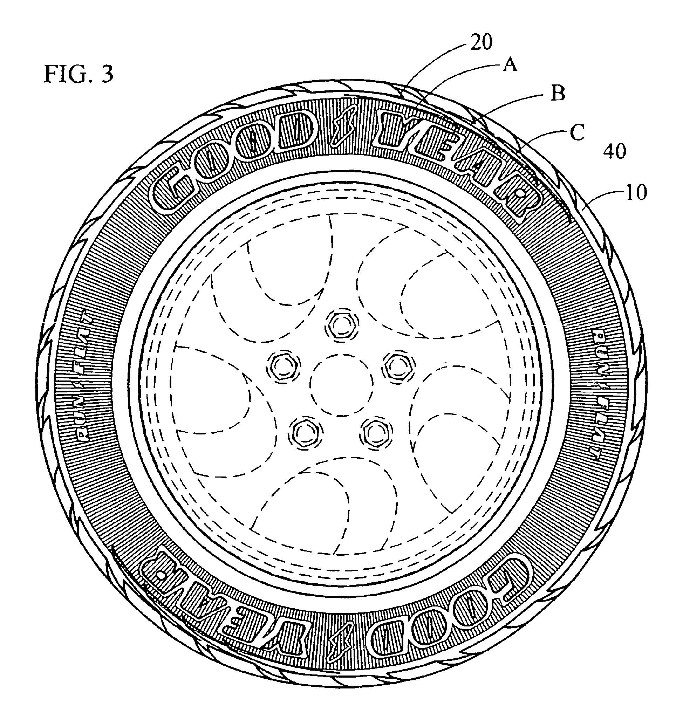

In FIG. 3 the first pattern A having parallel ridges is superimposed over the second pattern B having a flat surface, both pattern A and pattern B forming similar indicia. The indicia of pattern A is smaller than the indicia of pattern B. Both patterns A and B are located within a third pattern C, pattern C having substantially parallel ridges 50 arranged to form a wide circumferential band around the tire's sidewall. Preferably the patterns forming the larger indicia extend rather uniformly from the superimposed indicia of pattern A or pattern B. As shown, the letters or indicia are closely spaced the outlining pattern blend seamlessly into an adjacent letter, however, it is important that the resultant effect is that both adjacent letters are clearly discernable to the observer.

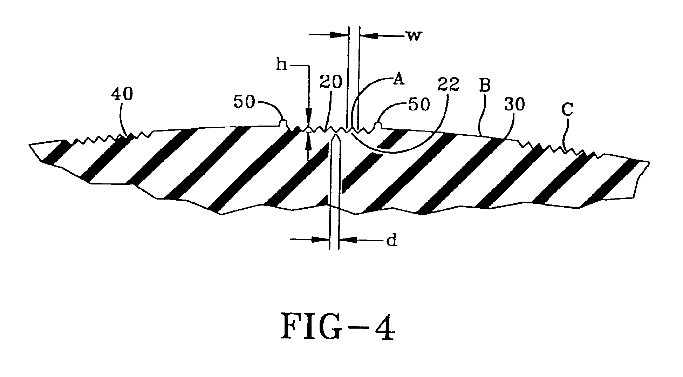

FIG. 4 is an enlarged cross-sectional view of a portion, of pattern C taken from FIG. 3. The ridge 40 of pattern C has an identical cross-section to those of the pattern A in the preferred embodiment as illustrated. The shape and size of the ridges 40 of design pattern C alternatively could be dissimilar. One of the primary functions of design pattern C is to provide a circumferential band for the overall sidewall design formed by the combination of patterns A, B and C. The pattern C also provides a means to improve venting of gases in the region of the sidewall during the molding of the tire.

FIG. 4 also shows an enlarged cross-sectional view of pattern A taken from FIG. 3. The view illustrates the trapezoidal ridges 20 of generally triangular cross-sectional shape. To facilitate molding and mold construction, the adjacent bases 22 may be spaced a distance (d) of less than 1/2 the height (h) of the ridge 20 and the space (d) should be less than 50% the width (w) of the base 22. This insures that the flat surface 23 formed by the spacing of the ridges 20 is minimized. The spaced distance (d) is effectively shadowed by the adjacent ridges 20 insuring a light deflecting or non-reflective background. The ridges 20 may extend to a height of 0.45 mm from the sidewall and have a base 22 of 0.9 mm in width. In the preferred embodiment, each base 22 of ridge 20 is spaced a distance (d) of less than one half the width of the base. In the preferred embodiment the distance (d) was set at 0.3 mm. The very tip of the triangular shaped ridge 20 may be truncated in order to facilitate mold construction.

FIG. 4 also shows an enlarged cross-sectional view of pattern B taken from FIG. 3. The pattern A is superimposed over the generally flat surface 30 of pattern B which is outlined by the fine annular ridges 50. To enhance the visual appearance of the pattern B, it is preferred that the outline ridges 50 of pattern B extend outward from the surface of the sidewall. In the preferred embodiment, the ridges 50 of pattern B extend from the sidewall a distance of less than 1 mm. The ridges 20, 40 of pattern A and pattern C extend from the sidewall 12 of the tire 10 distances of less than 1 mm respectively. It is not considered essential that the ridges 40 of pattern C extend a distance less than the ridges 20 of pattern A. Pattern B, however, need not extend outwardly from the ridges 20 of pattern A in order to achieve the most striking visual appearance.

The lay-out, as described above has several distinct advantages in addition to improved appearance. The outlined pattern B indicias by a larger pattern A indicias are believed to be preferable to the use of a simple solid indicium because the use of multiple ridges of pattern A tend to highlight the indicia because the observer's attention is drawn to the contrasting appearance as illustrated in FIG. 1.

A second benefit of the lay-out is that the intersection of the ridges 20 of pattern A with the annular ridges 50 of pattern B and the ridges 40 of pattern C provide improved venting of entrapped gases. The improved venting greatly minimizes the occurrence of surface blemishes that occur as a result of entrapped gases during the molding process.

The visual appearance of the tire 10 is believed to be an improvement over currently available products. The design pattern B, when used to outline a smaller superimposed pattern A, yields a character having a dynamic visual impression. The wide decorative band formed by pattern C provides a background which enhances the characters formed by patterns A and B. The wide decorative band of C has changing light reflection characteristics as a function of tire position and the observer's perspective view. The ridges 20 of pattern A tend to deflect light at the top and bottom of the tire but exhibit a shiny appearance to the left or right while the flat surface 30 of pattern B is highly light reflective as shown in FIG. 3.

It has been observed that a tire made according to the present invention has characters of unique visual appearance to the observer of the tire. In the particular, when the observer looks at the tire sidewall from any angular perspective relative to the tire, the characters of pattern A appear dark against the shiny or highly light reflective pattern B yielding a high contrast with the background. The pattern B appears light against the dark pattern A yielding an inverse contrast opposite to the light reflective appearance. This visual appearance adds to the unique aesthetic quality and appeal of this sidewall design because the sidewall lettering has a greatly enlarged dimensional appearance.

The prior art tires were designed to maximize contrast by using a combination of protruding flat letters or outlined lettering on a flat background, striped letters on a flat background, or flat letters on a striped background. The use of flat lettering in combination with a striped outline background as described above achieves a novel contrast changing appearance heretofore unachieved in tire sidewall marking.

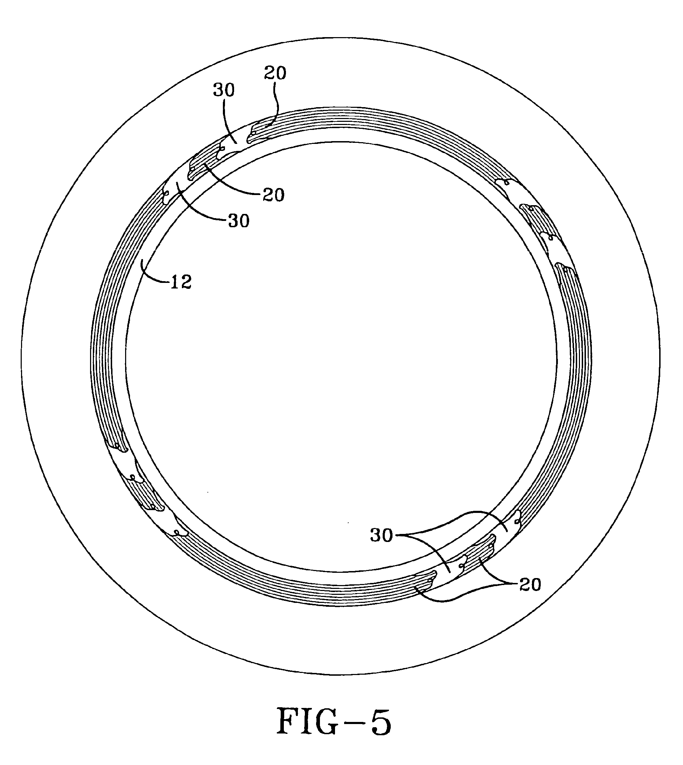

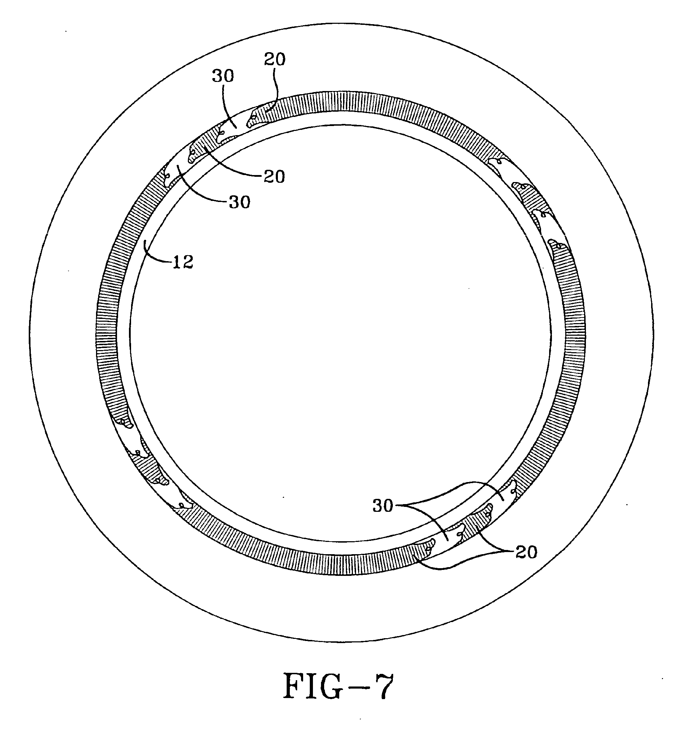

An interesting innovation of the invention is to have the indicia repeated in a repeated series of slightly overlapping indicia. As shown in FIG. 5 and 7, a series of Eagle heads are shown, one or more heads having the ridged pattern A and one or more heads having the substantially smooth flat surface of pattern B.

The resultant effect is an appearance of several Eagles flying in a formation. This feature is enhanced due to the three dimensional illusion created by the superimposing of the patterns A and patterns B.

To those consumers of tires, the efforts manufacturers of tires go to get their products noticed is mostly unappreciated. To those skilled in the art of tire design such features that enhance the readability of the indicia are very important and quite valuable.

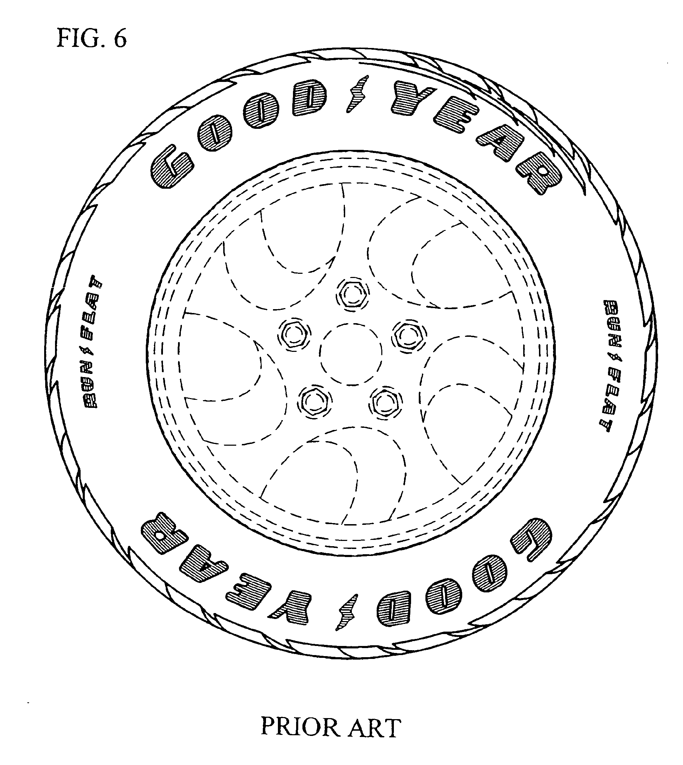

The invention described above of outlining the black lettering with an contrasting surface of black lettering is a subtle but remarkably effective way of achieving a three dimensional illusion that makes the lettering appear to jump out or into the tire's sidewall. The tire's lettering of the present invention are visually more readable than the prior art concepts of enhancing the appearance of black lettering on black tires. In FIG. 6, the prior art sidewall shows a serrated pattern for lettering. The letter size is the same as the pattern A of FIG. 3. The prior art letters are spaced to maintain readability. In contrast the superimposed patterns A and B in either embodiment of the present invention within almost the same circumferential space is able to have the underlying larger letter pattern run together at adjacent letters while still being totally legible. Using only one pattern A or B of run together lettering would be almost impossible to read without the addition of the superimposed lettering. Furthermore, lettering of such large sizes was heretofore not very practical because the resultant word with space between each letter would be wrapped around the majority of the tire. Ideally, the tire name should fit within a 90 degree quadrant or less. This permits the tire sidewall to exhibit more information. The invention described above permits the use of large letters that can be easily fitted within the desired circumferential space of 90 degree or less.

In the preferred embodiment, the tire sidewall comprises an elastomer pigmented with carbon black. Such is commonly called a blackwall tire. It is believed that the sidewall could be pigmented white, as in white sidewall tires, or any other color and still achieve the visual contrast effects as described above.

## Claims

1. The tire sidewall (12) having an annular surface (13), the surface (13) having a design pattern, the design pattern comprising:
a first design pattern having a substantially smooth flat surface (30);
a second design pattern having a plurality of parallel ridges (20), the first pattern and second pattern each forming a similar indicia of similar size; and wherein the first pattern and second pattern partially circumferentially overlap.

2. The tire sidewall of claim 1 wherein the first or second design patterns are repeated in a partially overlapping and alternating series of similar indicia.

3. The tire sidewall of claim 2 wherein the patterns resemble eagle heads, one or more heads having ridges and one or more heads having a substantially smooth flat surface.

## Patentansprüche

1. Reifenseitenwand (12) mit einer ringförmigen Oberfläche (13), wobei die Oberfläche (13) ein Designmuster aufweist, wobei das Designmuster umfasst:
ein erstes Designmuster mit einer im Wesentlichen glatten flachen Oberfläche (30);
ein zweites Designmuster mit einer Vielzahl paralleler Rippen (20), wobei das erste Muster und das zweite Muster jedes ein ähnliches Zeichen ähnlicher Größe bilden; und wobei das erste Muster und das zweite Muster einander teilweise in Umfangsrichtung überlappen.

2. Reifenseitenwand nach Anspruch 1, wobei das erste oder das zweite Muster in einer teilweise überlappenden und abwechselnden Serie ähnlicher Zeichen wiederholt wird.

3. Reifenseitenwand nach Anspruch 2, wobei die Muster Adlerköpfen gleichen, wobei ein oder mehrere Köpfe Rippen aufweisen und ein oder mehrere Köpfe eine im Wesentlichen glatte flache Oberfläche aufweisen.

## Revendications

1. Flanc de bandage pneumatique (12) possédant une surface annulaire (13), la surface annulaire (13) possédant une sculpture, la sculpture comprenant :
un premier dessin possédant une surface plate essentiellement lisse (30) ;
un deuxième dessin possédant plusieurs nervures parallèles (20), le premier dessin et le deuxième dessin formant respectivement une empreinte similaire de dimension similaire ; et dans lequel le premier dessin et le deuxième dessin se chevauchent en partie en direction circonférentielle.

2. Flanc de bandage pneumatique selon la revendication 1, dans lequel le premier dessin ou le deuxième dessin se répète dans des séries alternantes d'empreintes qui se chevauchent en partie.

3. Flanc de bandage pneumatique selon la revendication 2, dans lequel les dessins ressemblent à des têtes d'aigles, une ou plusieurs têtes possédant des nervures et une ou plusieurs têtes possédant une surface plate essentiellement lisse.
